# EUROPÄISCHE PATENTANMELDUNG

(11) **EP 1 630 020 A2**
(43) Veröffentlichungstag der Anmeldung: **01.03.2006**
(21) Anmeldenummer: 05017456.4
(22) Anmeldetag: 11.08.2005
(51) Int. Cl.: B60J 5/10

(54) **Seitentür eines Kraftwagens**

(30) Priorität: 28.08.2004 DE 102004041742
(71) Anmelder: DaimlerChrysler AG, 70567 Stuttgart (DE)
(72) Erfinder: Fütterer, Michael, 71157 Hildrizhausen (DE)

(57) **Zusammenfassung**

Die Erfindung betrifft eine Seitentür eines Kraftwagens (4) mit einer Seitenscheibe (6) die durch einen Türrahmen (8) eingefasst ist. Die Erfindung zeichnet sich dadurch aus, dass eine Verriegelungsvorrichtung (10) vorgesehen ist, die im Bereich der Seitenscheibe und/oder des Türrahmens angeordnet ist. Die Seitentür (2) ist gegenüber einem Dachrahmen (12) oder einer Fahrzeugsäule (14) oberhalb einer Bordkante (16) durch die Verriegelungsvorrichtung (10) verriegelbar.

## Beschreibung

Die Erfindung betrifft eine Seitentür eines Kraftwagens nach dem Oberbegriff des Patentanspruchs 1.

Seitentüren von Kraftwagen sind in der Regel durch Scharniere an einer A-Säule oder einer B-Säule angeschlagen, wobei auf der gegenüberliegenden Seite der Seitentür eine Schließvorrichtung vorgesehen ist. Diese Schließvorrichtung befindet sich an einer B-Säule oder an einer C-Säule, wobei diese Schließvorrichtung unterhalb der Bordkante des Fahrzeuges angeordnet ist. Ferner weist die Seitentür einen Türrahmen auf, in dem eine Seitenscheibe eingefasst ist.

Eine entsprechende Seitentür ist beispielsweise in der DE 41 06 715 C2 offenbart. Insbesondere bei sehr langen Seitentüren kann es im Bereich des Türrahmens bei hohen Geschwindigkeiten zu Windgeräuschen kommen. Aus diesem Grund wird die Seitentür gegenüber einer Fahrzeugkarosserie durch eine geringfügige Krümmung entlang ihrer vertikalen Erstreckung vorgespannt, wodurch die gesamte Tür gegen die Karosserie gedrückt wird. Hierdurch werden zwar Windgeräusche reduziert, durch die Vorspannung wird beim Öffnen der Tür für den Benutzer eine unangenehme federnde Wirkung der Tür und eine höherer Kraftaufwand bei der Betätigung eines Türschlosses spürbar.

Die Aufgabe der Erfindung besteht darin, eine Seitentür für einen Kraftwagen bereitzustellen, die gegenüber dem Stand der Technik eine minimierte Vorspannung gegenüber der Seitenwand des Kraftwagens aufweist.

Die Lösung der Aufgabe besteht in einer Seitentür für einen Kraftwagen mit den Merkmalen des Patentanspruchs 1.

Gegenstand der Erfindung ist eine Seitentür eines Kraftwagens mit einer Seitenscheibe, die häufig in einem Türkörper versenkbar ausgestaltet ist und die durch einen Türrahmen eingefasst ist. Die Erfindung zeichnet sich dadurch aus, dass eine Verriegelungsvorrichtung vorgesehen ist, die im Bereich der Seitenscheibe und/oder des Türrahmens angeordnet ist. Hierbei ist die Seitentür gegenüber einem Dachrahmen oder gegenüber einer Fahrzeugsäule oberhalb einer Bordkante verriegelbar.

Durch die erfindungsgemäße Verriegelung der Seitentür wird die Seitentür oberhalb der Bordkante, insbesondere im Bereich des Dachrahmens fest mit der Fahrzeugkarosserie verriegelt. Hierdurch kann der Grad eines Vorspannens der Seitentür gegenüber der Fahrzeugkarosserie verringert werden oder ganz entfallen.

Zur Vorspannung der Seitentür wird diese entlang ihres vertikalen Verlaufes gegenüber der Fahrzeugkarosserie mit einer geringfügig höheren Krümmung versehen. Beim Schließen der Seitentür wird diese Krümmung gegenüber der Fahrzeugkarosserie, an der die Seitentür angepasst ist, analog eines Federelementes durch einen erhöhten Anpressdruck der Seitentür, insbesondere im Bereich des Dachrahmens ausgeglichen. Durch diesen erhöhten Anpressdruck wird die Neigung zu Windgeräuschen im Türbereich verringert.

Dieselbe Wirkung, nämlich die Verringerung der Windgeräusche im Türbereich, wird jedoch auch durch die erfindungsgemäße Verriegelung der Seitentür erzielt. Somit kann die Vorspannung der Seitentür reduziert werden, was eine Verbesserung des Türöffnungsgefühls für den Benutzer bedeutet.

Gleichzeitig wird durch die Verriegelung oberhalb der Bordkante ein Herausbiegen des Türrahmens durch einen unautorisierten Benutzer erschwert, was einen verbesserten Diebstahlschutz zur Folge hat.

In einer Ausführungsform der Erfindung umfasst die Verriegelungsvorrichtung einen Verriegelungsstift, der entlang einer Führung bewegbar angeordnet ist. Hiermit erfolgt die Verriegelung in einer technisch besonders günstig zu realisierenden Bauweise.

Hierbei ist die Verriegelungsvorrichtung an einem Türrahmenteilsstück angeordnet, das im Wesentlichen parallel zu einer Mittelsäule verläuft. Hierdurch kann die Verriegelungsvorrichtung besonders Platz sparend an der Seitentür angeordnet werden.

Der Verriegelungsstift steht in vorteilhafter Weise mit einer Aufnahmeöffnung im Dachrahmen im Eingriff.

Die Verriegelungsvorrichtung lässt sich Platz sparend besonders günstig in einem Hohlraum des Türrahmens anordnen.

Andererseits lässt sich die Verriegelungsvorrichtung auch direkt an einer Seitenscheibe anordnen, wobei eine Durchgangsöffnung durch den Türrahmen in den Dachrahmen oder eine Durchgangsöffnung durch den Türrahmen in die Fahrzeugsäule vorgesehen ist. Der Verriegelungsstift verläuft somit durch diese Durchgangsöffnungen und steht im Eingriff mit dem Dachrahmen beziehungsweise mit der Fahrzeugsäule.

Die Verriegelungsvorrichtung kann in einer vorteilhaften Ausgestaltungsform an ihren Bestimmungsort angeklebt sein. Durch Klebeverbindung können unterschiedliche Werkstoffe ausreichend fest miteinander verbunden werden. Somit ist das das Material der Verriegelungsvorrichtung weitgehend frei wählbar.

Hierbei ist beispielsweise die Verwendung eines Leichtmetallprofils oder eines Kunststoffprofils für die Führung der Verriegelungsvorrichtung zweckmäßig. Gleichzeitig kann der Verriegelungsstift aus verschiedenen Materialen wie beispielsweise Stahl, Kunststoff oder aus einem faserverstärktem Kunststoff bestehen. Eine Kombination verschiedener Werkstoffe, wie z. b. Stahl in einem obern Bereich und faserverstärkter Kunststoff in einem unteren Bereich des Verriegelungsstiftes ist ebenfalls zweckmäßig.

Vorteilhafte Ausgestaltungsformen der Erfindung sind anhand der Figuren näher erläutert.

Dabei zeigen:
- Fig. 1: eine schematische Darstellung einer Fahrzeugseitenwand mit zwei Seitentüren,
- Fig. 2: einen Schnitt entlang der Linie II in Figur 1 mit einer Verriegelungsvorrichtung im Längsschnitt,
- Fig. 3: einen Schnitt entlang der Linie III in Figur 1, mit einem Querschnitt durch eine Verriegelungsvorrichtung und
- Fig. 4: einen Schnitt entlang der Linie IV aus Figur 1, der einen Querschnitt durch eine weitere Variante der Verriegelungsvorrichtung zeigt.

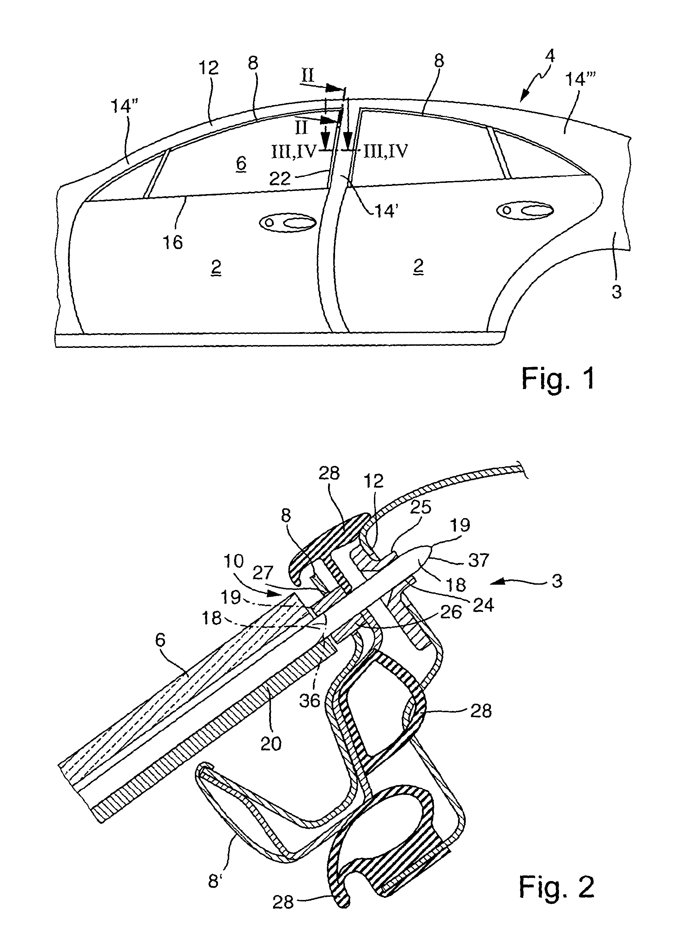

In **Figur 1** ist eine schematische,Darstellung einer Fahrzeugseitenwand eines Kraftwagens 4 gegeben. Der Kraftwagen weist zwei Seitentüren 2 auf. Jede Seitentür umfasst hierbei eine Seitenscheibe 6, die durch einen Türrahmen 8 eingefasst ist. Die Seitenwand 3 des Kraftwagen 4 umfasst drei Fahrzeugtragsäulen 14 (14', 14" und 14"'), sowie einen Dachrahmen 12.

Die Seitentüren sind mit, hier nicht dargestellten Scharnieren an den Fahrzeugtragsäulen (14', 14 " oder 14''') unterhalb der Bordkante 16 schwenkbar gelagert und mit einer Schließvorrichtung ebenfalls unterhalb der Bordkante 16 verschlossen.

In **Figur 2** ist ein Längsschnitt durch eine erfindungsgemäße Verriegelungsvorrichtung dargestellt, wobei der Schnitt entlang der Linie II in Figur 1 verläuft. Der Ausschnitt zeigt den Übergangsbereich der Seitentür 6 mit dem Türrahmen 8, der am Dachrahmen 12 der Seitenwand 3 anliegt. Hierbei ist die Seitenscheibe 6 durch den Türrahmen 8 eingefasst. Der Türrahmen 8 erstreckt sich auch auf eine innere Seite der Seitenscheibe und bildet dort den Innenrahmen 8'. Der Türinnenrahmen 8' liegt hierbei an Türdichtungen 28 an, die wiederum am Dachrahmen 12 befestigt sind. Die Seitenscheibe 6 ist hierbei in geschlossenem Zustand dargestellt.

Es ist eine Verriegelungsvorrichtung 10 vorgesehen, die in diesem Beispiel direkt an der Fensterscheibe 6 durch eine Klebeverbindung beziehungsweise durch eine Klebenaht 34 befestigt ist. Die Verriegelungsvorrichtung 10 weist eine Führung 20 auf, die in Form eines Aluminiumstrangpressprofils ausgestaltet ist und in der ein Verriegelungsstift 18 angeordnet ist.

Der Verriegelungsstift 18 weist eine Spitze 19 auf. In Figur 2 ist der Verriegelungsstift 18 in zwei Endpositionen dargestellt, wobei die Position 36 (angedeutet durch die Spitze 19, abschließend mit einer Oberkante der Führung 20) in eine entriegelte Position markiert. Die Position 37 (Spitze 19 im Dachrahmen 12) zeigt eine verriegelte Position des Verriegelungsstiftes 18.

Hierbei wird der Verriegelungsstift 18 entlang der Führung 20 verschoben. Dabei durchdringt der Verriegelungsstift 18 mit seiner Spitze 19 eine Durchgangsöffnung 27 im Türrahmen 8 (hier ein vertikal verlaufendes Türrahmenteilstücks, das am Dachrahmen 12 anliegt). Im Weiteren wird der Verriegelungsstift 18 in eine Aufnahmeöffnung 24 im Dachrahmen 12 bewegt, hierbei liegt er an einer einstellbare (justierbare) Aufnahmeplatte 25, die in der Aufnahmeöffnung 24 befestigt ist an. Bevorzugt ist die Aufnahmeplatte mit dem Dachrahmen 12 verschraubt In dieser Stellung (Position 37) ist die Seitentür 2 gegenüber dem Dachrahmen 12 durch die Verriegelungsvorrichtung 10 verriegelt.

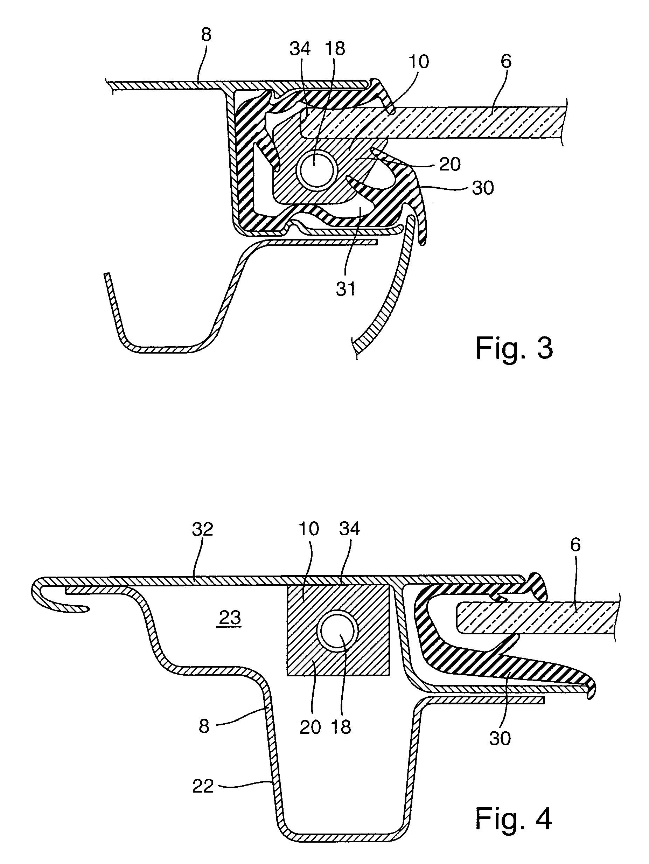

Figur 3 zeigt einen Querschnitt durch die Verriegelungsvorrichtung nach Figur 2. Hierbei ist zu erkennen, dass die Führung 20 mit dem Verriegelungsstift 18 an der Seitenscheibe 6 durch die Klebenaht 34 befestigt ist. Die Führungsschiene 20 ist somit vertikal entlang der Seitenscheibe 6 angeordnet und wird vom Türrahmen 8, der hierbei einen U-förmigen Querschnittsbereich zum Einfassen der Seitenscheibe 6 aufweist, umfasst. Hierbei ist wiederum eine Scheibendichtung 30 in dem U-förmigen Querschnittsbereich des Türrahmens 8 angeordnet, wobei die Scheibendichtung 30 sowohl die Verriegelungsvorrichtung 10 als auch die Seitenscheibe 6 abdichtet.

Eine weitere mögliche Anordnung der Verriegelungsvorrichtung 10 an der Seitentür 2 ist in Figur 4 gegeben. Hierbei ist die Verriegelungsvorrichtung 10 in einem Hohlraum 23 des Türrahmens 8 durch eine Klebenaht 34 befestigt. Die Verriegelungsvorrichtung 10 ist hierbei an einer Blende 32 angeklebt, die den Türrahmen 8 nach außen hin abdeckt. Ansonsten ist für die Verriegelungsvorrichtung 10 in Figur 4 dieselbe Funktionsweise vorgesehen, die bereits zur Figur 2 beschrieben ist.

Die Anordnung der Verriegelungsvorrichtung 10 in den Figuren 3 und 4 weisen als Gemeinsamkeit auf, dass sie entlang eines vertikal verlaufenden Türrahmenteilstücks 22 angeordnet sind und in ihrer Wirkungsweise mit dem Dachrahmen 12 im Eingriff stehen. Grundsätzlich kann die Verriegelungsvorrichtung auch weitgehend horizontal in einem oberen Dachrahmenteilstück angeordnet sein, und mit einer Türsäule beispielsweise der B-Säule 14' im Eingriff stehen.

Zur Betätigung der Verriegelungsvorrichtung 10 können grundsätzlich alle geeigneten Betätigungsvorrichtungen angewendet werden. Der Übersichtlichkeit halber ist in den Figuren 2 bis 4 auf die Darstellung einer derartigen Betätigungsvorrichtung verzichtet worden. Als vorteilhaft haben sich elektromagnetische und elektropneumatische Antriebe herausgestellt. Hierbei weist ein elektromagnetischer Antrieb den Vorteil auf, dass auf den Aufbau von Druckluft verzichtet werden kann.

Zur Realisierung der Antriebsvorrichtung kann beispielsweise ein Elektromagnet im Dachrahmen, im Türkörper oder im Türfensterrahmen angeordnet sein. Durch Überwindung eines ebenfalls nicht dargestellten Federmechanismusses wird in einem Schließzustand der Seitenscheibe 6 der Verriegelungsstift 18 unter Überwindung der Federkraft durch den Elektromagneten in die Aufnahmeöffnung 24 des Dachrahmens 12 gezogen. Solange die Spannung am Elektromagneten anliegt, wird der Verriegelungsstift 18 in der Verriegelungsposition 37 gehalten. Bei einer Betätigung einer Türschließeinrichtung wird hierbei der Verriegelungsstift 18 freigegeben und in die Position 36 zurückgedrückt. Das Zurückdrücken des Verriegelungsstiftes 18 erfolgt durch das bereits erwähnte Federelement sehr schnell, weshalb der Benutzer die zusätzliche Verriegelung beim Öffnen der Fahrzeugtür nicht bemerkt.

Zur Sicherung der Insassen bei einem Unfall ist die Verriegelungsvorrichtung in der Art gesteuert, dass beim Eintreten eines Unfalls der Betätigungsvorrichtung (beispielsweise) dem Elektromagneten die Spannung entzogen wird und dieser die Verriegelungsvorrichtung freigibt. Über die Federkraft wird der Verriegelungsstift 18 zurück in die Position 37 gezogen. Somit ist die Verriegelung aufgehoben und die Tür frei öffenbar. Hierbei ist es zweckmäßig, dass Crashsensoren, die im Fahrzeug vorhanden sind und für die Steuerung von Airbags vorgesehen sind, ebenfalls die Steuerung der Notfallentriegelung der Verriegelungsvorrichtung 10 übernehmen. Somit kann gewährleistet werden, dass in einem Crashfall die Entarretierung sicher erfolgt. Auch in einer anderen Notsituation, beispielsweise bei einem Ausfall des Bordnetzes beziehungsweise bei einem Stromausfall ist so garantiert, dass eine Entriegelung der Verriegelungsvorrichtung 10 erfolgt.

## Patentansprüche

1. Seitentür eines Kraftwagens (14), mit einer Seitenscheibe (6), die durch einen Türrahmen eingefasst ist,
**dadurch gekennzeichnet,**
**dass** eine Verriegelungsvorrichtung (10) vorgesehen ist, die im Bereich der Seitenscheibe (6) und/oder des Türrahmens (8) angeordnet ist und mit der die Seitentür (2) gegenüber einem Dachrahmen (12) oder einer Fahrzeugsäule (14) oberhalb einer Bordkante (16) verriegelbar ist.

2. Seitentür nach Anspruch 1,
**dadurch gekennzeichnet,**
**dass** die Verriegelungsvorrichtung (10) einen Verriegelungsstift umfasst, der entlang einer Führung bewegbar angeordnet ist.

3. Seitentür nach Anspruch 2,
**dadurch gekennzeichnet,**
**dass** die Verriegelungsvorrichtung (10) an einem im Wesentlichen parallel zu einer Mittelsäule (14') verlaufenden Türrahmenteilstücks angeordnet ist.

4. Seitentür nach einem der Ansprüche 2 oder 3,
**dadurch gekennzeichnet,**
**dass** der Verriegelungsstift (18) mit einer Aufnahmeöffnung (24) im Dachrahmen (12) oder in der Fahrzeugsäule (14) im Eingriff steht.

5. Seitentür nach einem der vorhergehenden Ansprüche,
**dadurch gekennzeichnet,**
**dass** die Verriegelungsvorrichtung (10) in einen Hohlraum (23) des Türrahmens (8) angeordnet ist.

6. Seitentür nach einem der Ansprüche 2 bis 4,
**dadurch gekennzeichnet,**
**dass** die Verriegelungsvorrichtung (10) an der Seitenscheibe (6) angeordnet ist und durch eine Durchgangsöffnung (26) des Türrahmens (8) in den Dachrahmen (12) oder in die Fahrzeugsäule (14) eingreift.

7. Seitentür nach einem der vorhergehenden Ansprüche,
**dadurch gekennzeichnet,**
**dass** die Verriegelungsvorrichtung (10) an ihrem Bestimmungsort angeklebt ist.

8. Seitentür nach einem der vorhergehenden Ansprüche,
**dadurch gekennzeichnet,**
**dass** die Führung (20) in Form eines Leichtmetallprofils oder in Form eines Kunststoffprofils dargestellt ist.

9. Seitentür nach einem der vorhergehenden Ansprüche,
**dadurch gekennzeichnet,**
**dass** der Verriegelungsstift (18) Stahl, Kunststoff oder einem faserverstärkten Kunststoff ausgestaltet ist.
